# NEW EUROPEAN PATENT SPECIFICATION

(11) **EP 0 711 258 B2**
(45) Date of publication and mention of the opposition decision: **09.10.2002**
(45) Mention of the grant of the patent: 13.08.1997
(21) Application number: 95921757.1
(22) Date of filing: 24.05.1995
(51) Int. Cl.: C03C 13/00

(54) **GLASS-FIBER COMPOSITIONS**
GLASFASERZUSAMMENSETZUNGEN
COMPOSITIONS DE FIBRES DE VERRE

(30) Priority: 28.05.1994 DE 4418726
(43) Date of publication of application: 15.05.1996
(60) Divisional application: 96112380.9
(73) Proprietor: SAINT-GOBAIN ISOVER, 92400 Courbevoie (FR)
(72) Inventor: DE MERINGO, Alain, F-75005 Paris (FR); BATTIGELLI, Jean, F-60290 Rantigny (FR); FURTAK, Hans, D-67346 Speyer am Rhein (DE)
(74) Representative: Renous Chan, Véronique
(86) International application number: EP9501993
(87) International publication number: WO95032927

(56) References cited:
- EP-A- 0 399 320
- EP-A- 0 412 878
- EP-A- 0 588 251
- EP-B- 0 009 418
- EP-B- 0 019 600
- WO-A-95/32925
- WO-A-95/32926
- GB-A- 811 243
- GB-A- 1 096 465
- US-A- 3 328 142
- US-A- 5 055 428
- GLASTECHNISCHE BERICHTE, GLASTECHNISCHE BERICHTE, vol. 64, no. 1, January 1991 FRANKFURT vol. 64, no. 1, January 1991 FRANKFURT DE, DE, pages 16-28, XP 000178832 pages 16-28, XP 000178832 R. M. POTTER ET AL. 'Glass Fiber R. M. POTTER ET AL. 'Glass Fiber dissolution in a Physiological Saline dissolution in a Physiological Saline Solution' Solution'
- Ann.Occup.Hyg., Vol.38, No.6, pp.857-877, Ann.Occup.Hyg., Vol.38, No.6, pp.857-877, 1994, by S.M.Mattson 1994, by S.M.Mattson

## Description

The present invention relates to a glass-fiber composition that is biologically degradable.

The prior art describes some glass-fiber compositions which are said to be biologically degradable.

The biological degradability of glass-fiber compositions is of great importance because various studies point out that some glass fibers with very small diameters in the range of less than 3 microns may be carcinogenic, while biologically degradable glass fibers of such dimensions show no carcinogenicity.

However not only the biological degradability is of crucial importance but also the mechanical and thermal properties of the glass fibers, or the products produced therefrom, the resistance of the glass fibers and the processibility of the glass-fiber composition. For example glass fibers are used to a great extent for insulation purposes. For these applications sufficient moisture-resistance is necessary.

Also, the glass-fiber composition must permit processibility by known methods for producing glass fibers with a small diameter, for example the centrifugal technique, in particular the inner centrifugal technique (this technique is described for example in US-PS 4 203 745).

GB-A-1 096 465 discloses compositions for the manufacture of glass and glass-fibers which comprise silica, boron oxide, calcium oxide and sodium oxide.

The report published in "Glastechnische Berichte", vol. 64, no. 1 (1991) presents compositions which consist of SiO₂, Al₂O₃ Car, MgO, Na₂O, B₂O₃ and other oxides as optional ingredients and their dissolution rates under conditions approximating those thought to exist in the lung.

Inorganic fibers which are degradable or biosoluble in physiological media are disclosed in EP-A-0 412 878, US-A-5 055 428 and EP-A-0 588 251. These fibers comprise silica, alkaline earth oxide, alkali oxide and boron oxide. The fibers according to EP-A-0 588 251 furthermore contain zirconium oxide as compulsory ingredient.

The invention is based on the problem of providing a novel glass-fiber composition that is characterized by biological degradability, has good stability or resistance to moisture and is easy to process.

The invention is based on the finding that this problem can be solved by a glass-fiber composition that contains considerable amounts of alkali oxides and boron oxide, as well as optionally aluminum oxide.

It has turned out that such a glass-fiber composition fulfills the combination of the necessary properties, namely biological degradability, resistance to moisture and good processibility.

The object of the invention is a glass-fiber composition that is biologically degradable, consisting essentially of the following constituents in percent by weight:

| | |
|---|---|
| SiO₂ | 45 to 60 |
| Al₂O₃ | less than 2 and at least 0.5 |
| CaO + MgO | 10 to 16 |
| Na₂O + K₂O | 15 to 23 |
| B₂O₃ | more than 12 to 18 |

The inventive glass-fiber compositions are processible by the centrifugal technique. The obtained fibers have good resistance to moisture. Surprisingly enough, the glass-fiber compositions show biological degradability. The mean fiber diameter is preferably less than 10 microns and is in particular between 2.5 and 5 microns.

The inventive glass-fiber compositions preferably have the following constituents in percent by weight:

| | |
|---|---|
| SiO₂ | 45 to 60 |
| Al₂O₃ | less than 2 and at least 0.5 |
| CaO + MgO | 10 to 16 |
| Na₂O + K₂O | less than 18 |
| B₂O₃ | more than 12 to 18 |

The inventive glass-fiber compositions preferably have less than 57 percent by weight silicon dioxide, in particular less than 56.5 percent by weight.

By adding aluminum oxide an improvement in moisture-resistance is obtained. The inventive compositions are therefore given at least 0.5 percent by weight, and usually less than 1.5 percent by weight aluminum oxide.

According to a further preferred embodiment the composition contains less than 2 percent by weight magnesium oxide.

The moisture-resistance of the inventive glass-fiber compositions was determined by a standard method known as the DGG method. In the DGG method 10 g finely ground glass with a grain size between about 360 and 400 microns is held at the boiling point for five hours in 100 ml water. After quick cooling of the material the solution is filtered and a certain volume of the filtrate evaporated to dryness. The weight of the thus obtained dry material permits the amount of glass dissolved in the water to be calculated. The amount is stated in milligrams per gram of tested glass.

The biological degradability of the inventive glass compositions was tested by introducing 1 g of the glass powder, as described for the DGG method, into a physiological solution with the composition stated below and a pH value of 7.4:

| | |
|---|---|
| NaCl | 6.78 |
| NH₄Cl | 0.535 |
| NaHCO₃ | 2.268 |
| NaH₂PO₄H₂O | 0.166 |
| (Na₃ citrate) 2H₂O | 0.059 |
| Glycine | 0.450 |
| H₂SO₄ | 0.049 |
| CaCl₂ | 0.022 |

Dynamic test conditions were selected as are described in Scholze and Conradt. The flow rate was 300 ml/day. The duration of the test was 14 days. The results are stated as percent of SiO₂ in the solution x 100 after 14 days.

The invention shall be described in more detail in the following with reference to examples.

### Example 1

A glass with the following composition in percent by weight was melted:

| | |
|---|---|
| SiO₂ | 57.5 |
| Al₂O₃ | 0.5 |
| CaO | 8.1 |
| MgO | 3.6 |
| Na₂O | 17.25 |
| K₂O | 0.35 |
| B₂O₃ | 12.4 |
| Diverse | 0.3. |

These glass compositions could be processed by the centrifugal technique.

Using the above-described DGG method a value of 30 mg/g was determined.

The above-described test for biological degradability yielded a value of 600.

### Example 2

A glass with the following composition in percent by weight was melted:

| | |
|---|---|
| SiO₂ | 57.5 |
| Al₂O₃ | 0.5 |
| CaO | 8.4 |
| MgO | 1.7 |
| Na₂O | 17.0 |
| K₂O | 0.5 |
| B₂O₃ | 14.0 |
| Diverse | 0.4 |

These glass compositions could be processed by the centrifugal technique.

Using the above-described DGG method a value of 30 mg/g was determined.

The above-described test for biological degradability yielded a value of 600.

## Claims

1. A glass-fiber composition that is biologically degradable, consisting essentially of the following constituents in percent by weight :
| | |
|---|---|
| SiO₂ | 45 to 60 |
| Al₂O₃ | less than 2 and at least 0.5 |
| CaO + MgO | 10 to 16 |
| Na₂O + K₂O | 15 to 23 |
| B₂O₃ | more than 12 to 18 |

2. The glass-fiber composition of claim 1, ***characterized by*** the following constituents in percent by weight:
| | |
|---|---|
| SiO₂ | 45 to 60 |
| Al₂O₃ | less than 2 and at least 0.5 |
| CaO + MgO | 10 to 16 |
| Na₂O + K₂O | less than 18 |
| B₂O₃ | more than 12 to 18 |

3. The glass-fiber composition of claim 1, ***characterized by*** the following constituents in percent by weight :
| | |
|---|---|
| SiO₂ | 47 to 57 |
| Al₂O₃ | less than 2 and at least 0.5 |
| CaO + MgO | 12 to 15 |
| Na₂O + K₂O | 16 to 20 |
| B₂O₃ | more than 12 to 16 |

4. The glass-fiber composition of claim 1, ***characterized by*** the following constituents in percent by weight :
| | |
|---|---|
| SiO₂ | 52 to 60 |
| Al₂O₃ | 0.5 to 1.5 |
| CaO + MgO | 11 to 12.5 |
| Na₂O + K₂O | 16 to 18.5 |
| B₂O₃ | more than 12 to 14 |

5. The glass-fiber composition of any claims 1 to 4, ***characterized in that*** the content of silicon dioxide is less than 57 percent by weight.

6. The glass-fiber composition of any claims 1 to 5, ***characterized in that*** the content of silicon dioxide is less than 56,5 percent by weight.

7. The glass-fiber composition of any of claims 1 to 6, ***characterized in that*** the content of magnesium oxide is less than 2 percent by weight.

## Patentansprüche

1. Biologisch abbaubare Glasfaserzusammensetzung im wesehtlichen bestehend aus den folgenden Bestandteilen in Gewichtsprozent:
| | |
|---|---|
| SiO₂ | 45 bis 60 |
| Al₂O₃ | weniger als 2 und mehr als 0.5 |
| CaO + MgO | 10 bis 16 |
| Na₂O + K₂O | 15 bis 23 |
| B₂O₃ | mehr als 12 bis 18 |

2. Glasfaserzusammensetzung nach Anspruch 1, **dadurch gekennzeichnet, dass** sie die nachfolgenden Bestandteile in Gewichtsprozent enthält:
| | |
|---|---|
| SiO₂ | 45 bis 60 |
| Al₂O₃ | weniger als 2 und mehr als 0.5 |
| CaO + MgO | 10 bis 16 |
| Na₂O + K₂O | weniger als 18 |
| B₂O₃ | mehr als 12 bis 18 |

3. Glasfaserzusammensetzung nach Anspruch 1, **dadurch gekennzeichnet, dass** sie die nachfolgenden Bestandteile in Gewichtsprozent enthält;
| | |
|---|---|
| SiO₂ | 47 bis 57 |
| Al₂O₃ | weniger als 2 und mehr als 0,5 |
| CaO + MgO | 12 bis 15 |
| Na₂O + K₂O | 16 bis 20 |
| B₂O₃ | mehr als 12 bis 16 |

4. Glasfaserzusammensetzung nach Ansprach 1, **dadurch gekennzeichnet, dass** sie die nachfolgenden Bestandteile in Gewichtsprozont enthält;
| | |
|---|---|
| SiO₂ | 52 bis 60 |
| Al₂O₃ | 0,5 bis 1,5 |
| CaO + MgO | 11 bis 12,5 |
| Na₂O + K₂O | 16 bis 18,5 |
| B₂O₃ | mehr als 12 bis 14 |

5. Glasfaserzusammensetzung nach einem der Ansprüche 1 bis 4, **dadurch gekennzeichnet, dass** der Gehalt an Siliziumdioxid kleiner als 57 Gewichtsprozent ist.

6. Glasfaserzusammensetzung nach einem der Ansprüche 1 bis 5, **dadurch gekennzeichnet, dass** der Gehalt an Siliziumdioxid kleiner als 56,5 Gewichtsprozent ist.

7. Glasfaserzusammensetzung nach einem der Ansprüche 1 bis 6, **dadurch gekennzeichnet, dass** der Magnesiumoxydgehalt kleiner als 2 Gewichtsprozent ist.

## Revendications

1. Composition pour fibres de verre, biologiquement dégradables, constituée essentiellement par les constituants suivants, en pourcentage massique :
| | |
|---|---|
| SiO₂ | 45 à 60 |
| Al₂O₃ | moins de 2 et plus de 0,5 |
| CaO + MgO | 10 à 16 |
| Na₂O + K₂O | 15 à 23 |
| B₂O₃ | plus de 12 à 18 |

2. Composition pour fibres de verre selon la revendication 1, **caractérisée en ce qu'**elle comprend les constituants suivants, en pourcentage massique :
| | |
|---|---|
| SiO₂ | 45 à 60 |
| Al₂O₃ | moins de 2 et plus de 0,5 |
| CaO + MgO | 10 à 16 |
| Na₂O + K₂O | moins de 18 |
| B₂O₃ | plus de 12 à 18 |

3. Composition pour fibres de verre selon la revendication 1, **caractérisée en ce qu'**elle comprend les constituants suivants, en pourcentage massique :
| | |
|---|---|
| SiO₂ | 47 à 57 |
| Al₂O₃ | moins de 2 et plus de 0,5 |
| CaO + MgO | 12 à 15 |
| Na₂O + K₂O | 16 à 20 |
| B₂O₃ | plus de 12 à 16 |

4. Composition pour fibres de verre selon la revendication 1, **caractérisée en ce qu'**elle comprend les constituants suivants, en pourcentage massique :
| | |
|---|---|
| SiO₂ | 52 à 60 |
| Al₂O₃ | 0,5 à 1,5 |
| CaO + MgO | 11 à 12,5 |
| Na₂O + K₂O | 16 à 18,5 |
| B₂O₃ | plus de 12 à 14 |

5. Composition pour fibres de verre selon l'une quelconque des revendications 1 à 4, **caractérisée en ce que** le taux de silice est inférieur à 57 % en poids.

6. Composition pour fibres de verre selon l'une quelconque des revendications 1 à 5, **caractérisée en ce que** le taux de silice est inférieur à 56,5 % en poids.

7. Composition pour fibres de verre selon l'une quelconque des revendications 1 à 6, **caractérisée en ce que** le taux de magnésie est inférieur à 2 % en poids.
